(19) Europäisches Patentamt
European Patent Office
Office européen des brevets

(11) **EP 4 617 883 A1**

(12) **EUROPEAN PATENT APPLICATION**
published in accordance with Art. 153(4) EPC

(43) Date of publication:
**17.09.2025 Bulletin 2025/38**

(21) Application number: **23904024.9**

(22) Date of filing: **14.12.2023**

(51) International Patent Classification (IPC):
*G06F 12/1009* (2016.01)

(52) Cooperative Patent Classification (CPC):
**G06F 12/1009**

(86) International application number:
**PCT/KR2023/020626**

(87) International publication number:
**WO 2024/128825 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.12.2022 KR 20220174829
25.01.2023 KR 20230009583**

(71) Applicant: Samsung Electronics Co., Ltd.
Suwon-si, Gyeonggi-do 16677 (KR)

(72) Inventors:
• WOO, Hobin
Suwon-si, Gyeonggi-do 16677 (KR)
• LEE, Kisung
Suwon-si, Gyeonggi-do 16677 (KR)
• LEE, Woojoong
Suwon-si, Gyeonggi-do 16677 (KR)
• SHIN, Yoonho
Suwon-si, Gyeonggi-do 16677 (KR)
• JUN, Hyeeun
Suwon-si, Gyeonggi-do 16677 (KR)

(74) Representative: Walaski, Jan Filip et al
Venner Shipley LLP
200 Aldersgate
London EC1A 4HD (GB)

(54) **ELECTRONIC DEVICE AND MEMORY MANAGEMENT METHOD**

(57) An electronic device comprises a first memory included in a first node; a second memory included in a second node having a slower access speed than the first node; and a memory that stores instructions, wherein the instructions, when executed by a processor, cause the electronic device to receive a request for memory allocation of a page, and upon receiving the request for memory allocation of the page, determine whether there is a file mapped to the memory; and if there is a file mapped to the memory, allocate the page to the first memory included in the first node. Various other embodiments are possible.

FIG. 3

EP 4 617 883 A1

**Description**

[Technical Field]

The disclosure relates to an electronic device and a memory management method.

[Background Art]

Non-uniform memory access (NUMA) is one of the computer memory design methods used in multi-processor systems. In the MUMA, the time to access a memory may vary depending on the relative location between the memory and the processor. In the MUMA structure, the processor may allocate memory by determining a target node based on access locality.

The above-described information may be provided as a related art for the purpose of helping to understand the disclosure. No claim or determination is made as to whether any of the above is applicable as prior art related to the disclosure.

[Disclosure of Invention]

[Solution to Problem]

An electronic device according to an embodiment of the disclosure may include a first memory included in a first node, a second memory included in a second node having a slower access speed than the first node, and a memory storing instructions.

The instructions according to an embodiment of the disclosure, when executed by a processor, cause the electronic device to receive a request for memory allocation of a page, determine whether the request is for a file that has a page mapped to a memory when receiving the request for memory allocation of the page, and allocate the page to the first memory included in the first node when the request is for a file that has a page mapped to the memory.

A method of memory management performed by an electronic device comprising a first memory included in a first node and a second memory included in a second node with a slower access speed than the first node may include receiving a request for memory allocation of a page, determining whether the request is for a file that has a page mapped to a memory when receiving the request for memory allocation of the page, and allocating the page to the first memory included in the first node when the request is for a file that has a page mapped to the memory.

[Brief Description of Drawings]

FIG. 1 is a block diagram of an electronic device in a network environment according to various embodiments of the disclosure.

FIG. 2 is a block diagram illustrating a memory management method of an electronic device according to an embodiment of the disclosure.

FIG. 3 is a flow chart illustrating a memory management method of an electronic device according to an embodiment of the disclosure.

FIG. 4 is a flow chart illustrating a memory management method of an electronic device according to an embodiment of the disclosure.

FIG. 5 is a block diagram illustrating a page cache hit ratio manager according to an embodiment of the disclosure.

[Mode for the Invention]

A memory allocation method by non-uniform memory access may cause a problem of determining a target node without considering the access latency of data to be stored in the memory.

An electronic device and a memory management method according to an embodiment of the disclosure may manage memory allocation based on the access latency of data and the page cache hit ratio.

An electronic device and a memory management method according to an embodiment of the disclosure may control migration based on the access latency of data and the page cache hit ratio.

An electronic device and a memory management method according to an embodiment of the disclosure may improve memory performance and usage efficiency by managing memory based on the access latency of data and the page cache hit ratio.

The effects obtainable from the disclosure are not limited to the effects mentioned above, and other effects not mentioned will be clearly understood by those of ordinary skill in the art to which the disclosure belongs from the description below.

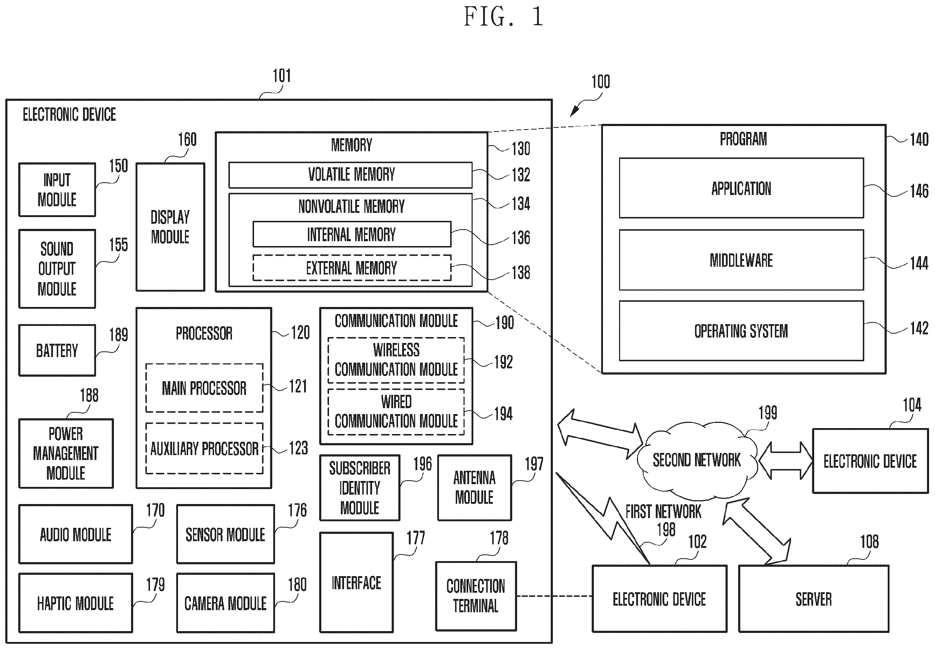

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

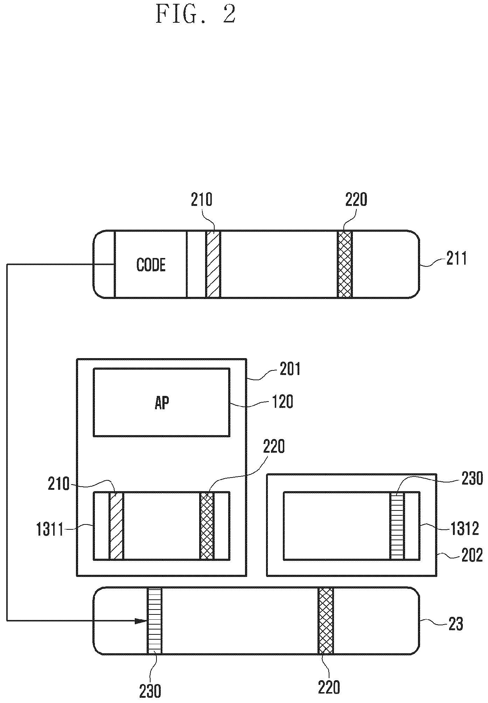

FIG. 2 is a block diagram illustrating a memory management method of an electronic device 101 according to an embodiment of the disclosure.

In an embodiment, the electronic device 101 may include a user space and a kernel space. The program 140 included in the electronic device 101 may freely access the user space, but may not directly access the kernel space.

In an embodiment, the user space may refer to all codes in which the program 140 is executed outside the kernel space. The user space may be a memory area in which all user mode applications operate. The kernel space may be a spare space for a kernel to execute a kernel extension function. The user space and the kernel space may be the same as the user area and the kernel area. The user space may include various programs and/or libraries used to interact with the kernel space.

In an embodiment, the user space may include a virtual address space 21. The kernel space may include a file system 23.

In an embodiment, the electronic device 101 may enhance security by separating the user space and the kernel space. The electronic device 101 may perform a process involving a hardware operation such as reading and/or writing a file in the kernel space. The electronic device 101 may manipulate data included in the kernel space by using a system call.

In an embodiment, when manipulating data by calling data from the kernel space by using a system call (e.g., system calls such as read() and/or write()), performance degradation may occur due to kernel context switching and memory copying to the user buffer.

In an embodiment, the electronic device 101 may read or write a file mapped to the memory. The electronic device 101 may map a file to a virtual address space by using a mmap system call and use the file. The electronic device 101 may read and write data and/or a file by using load and/or store processor instructions instead of a read and/or write system call.

In an embodiment, the electronic device 101 may include a plurality of nodes 201 and 202. Each of the plurality of nodes 201 and 202 may have different access speeds. For example, the access speed may be the time taken for the processor 120 to access a specific address of the memory 130 and obtain data. However, the disclosure is not limited thereto, and each of the plurality of nodes 201 and 202 may have the same access speed.

In an embodiment, the electronic device 101 may include a first node 201 and a second node 202. The first node 201 and the second node 202 may have different access speeds. However, the disclosure is not limited thereto, and the first node 201 and the second node 202 may have the same access speed.

In an embodiment, the difference in access speed between memory nodes may be caused by logical factors such as a physical distance between the processor 120 (e.g., CPU, application processor) and the memory 130 and/or an access latency.

In an embodiment, a node may be a bundle of a processor and a local memory with the same access speed. For example, in a two-socket non-uniform memory access (NUMA), the processor and memory mounted in each socket may constitute a node. However, the disclosure is not limited thereto, and a node consisting of only memory may exist.

In an embodiment, the electronic device 101 may include a zone in which a physical memory of a node is divided according to a purpose. The electronic device 101 may configure a target zone when allocating a memory. When allocating a memory, the electronic device 101 may configure a preferred zone based on a request flag, and if the memory allocation in the corresponding zone fails, allocation may be attempted while traversing the zonelist.

In an embodiment, the first node 201 may include a first memory 1311, and the second node 202 may include a second memory 1312. The first memory 1311 and the second memory 1312 may be different types of memories. For example, the first memory 1311 may be a dynamic random access memory (DRAM), and the second memory 1312 may be a persistent memory (PMEM). PMEM may be a memory that is accessible in units of bytes like DRAM and includes data persistence. The first memory 1311 and the second memory 1312 may have different access latencies due to physical characteristics.

In an embodiment, the first node 201 may be a node having a faster access speed than the second node 202.

In an embodiment, an anonymous page 210 represents a memory that has not been read from a file, and may be a page allocated for a general purpose necessary for the execution of a program, such as the heap and/or stack of the process.

In an embodiment, file pages 220 and 230 may have a data structure representing a memory including file data. The file pages 220 and 230 may be managed and/or accessed by a page cache. The file pages 220 and 230 may require a relatively slow access speed compared to the anonymous page 210.

In an embodiment, the anonymous page 210 may be directly mapped to the virtual address space 21 and accessed according to a load and/or store processor instruction. Accordingly, the anonymous page 210 may request an access latency faster than the specified access latency. The anonymous page 210 may have a faster access latency than the file pages 220 and 230.

In an embodiment, when there is a memory allocation request for the anonymous page 210 under the control of the processor 120, the electronic device 101 may allocate the anonymous page 210 to the first memory 1311 included in the first node 201, which is a node faster than the specified access speed.

In an embodiment, when there is a memory allocation request for the file pages 220 and 230 under the control of the processor 120, the electronic device 101 may determine whether there is a file mapped to the memory. For example, the first file page 220 may include a file mapped to a memory, and map the file in the virtual address space 211 and use the file.

In an embodiment, if the file has a page mapped to the memory, the electronic device 101 may allocate the file page (e.g., the first file page 220) to the first memory 1311 included in the first node 201, which is a node faster than the specified access speed, under the control of the processor 120.

In an embodiment, if the file has no page mapped to the memory, the electronic device 101 may allocate the file page (e.g., the second file page 230) to the second memory 1312 included in the second node 202, which is a node slower than the specified access speed, under the control of the processor 120.

In an embodiment, if there is a memory allocation request under the control of the processor 120, the electronic device 101 may select a node having a faster access speed than a specified access speed or a node having a slower access speed than a specified access speed based on the attributes and/or type of the page.

In an embodiment, if there is a memory allocation request under the control of the processor 120, the electronic device 101 may select a node having a faster access speed than a specified access speed or a node having a slower access speed than a specified access speed based on the user hint.

In an embodiment, if there is a memory allocation request under the control of the processor 120, the electronic device 101 may select a node having a faster access speed than a specified access speed or a node having a slower access speed than a specified access speed based on the file page cache hit ratio.

In an embodiment, the electronic device 101 may allocate a page to a selected node under the control of the processor 120.

In an embodiment, when there is a page migration request under the control of the processor 120, the electronic device 101 may determine whether to allow the page migration based on the attributes and/or type of the page.

In an embodiment, when there is a page migration request under the control of the processor 120, the electronic device 101 may determine whether to allow the page migration based on the user hint.

In an embodiment, when there is a page migration request under the control of the processor 120, the electronic device 101 may determine whether to allow the page migration based on whether the file has a page mapped to the memory.

In an embodiment, when there is a page migration request under the control of the processor 120, the electronic device 101 may determine whether to allow the page migration based on the file page cache hit ratio.

In an embodiment, the page migration may be an operation of moving an address on the memory to another location in a logic such as memory compaction.

In an embodiment, the electronic device 101 may manage pages based on mobility attributes to prevent memory compaction and for efficiency. The mobility attributes may have movable, non-movable, and/or reclaimable attributes. A page having a non-movable attributes may be non-migratable.

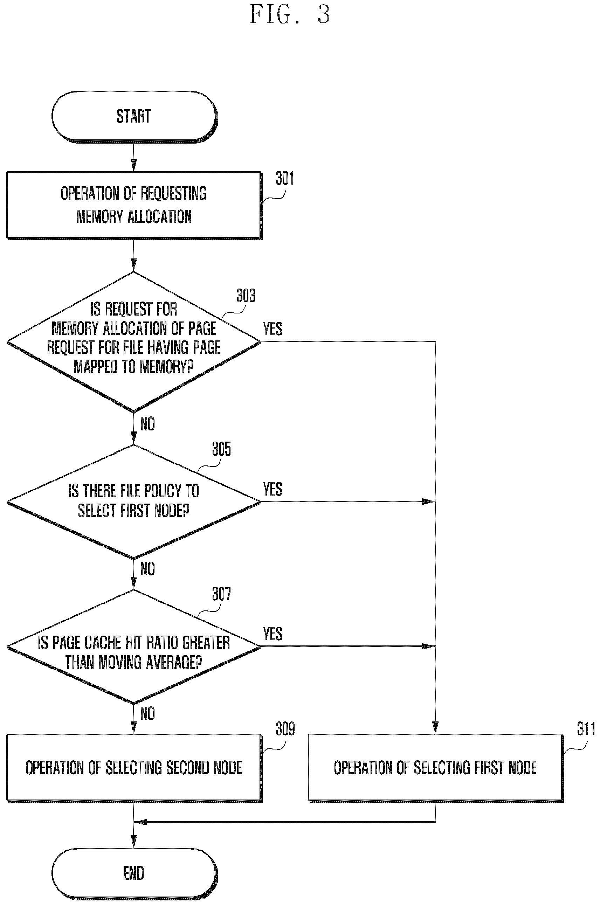

FIG. 3 is a flow chart illustrating a memory management method of an electronic device 101 according to an embodiment of the disclosure.

In an embodiment, the memory 130 may store instructions including a memory management method of the electronic device 101. When executed by the processor 120, the instructions stored in the memory 130 may cause the electronic device 101 to perform a memory management method of the electronic device 101.

In an embodiment, the computer-readable recording medium may record software for executing instructions for performing the memory management method of the electronic device 101 of FIG. 3.

In an embodiment, in operation 301, the first electronic device 101 may receive a request for memory allocation of a page under the control of the processor 120. The page may be a file page.

In an embodiment, when executed by the processor 120, the instructions stored in the memory 130 may cause the electronic device 101 to receive a request for memory allocation of a page.

In an embodiment, in operation 303, the first electronic device 101 may determine whether the memory allocation request of the page is a request for a file having a mapped page under the control of the processor 120. When receiving the request for memory allocation of a page, the electronic device 101 may determine whether there is a page mapped to the memory in the file under the control of the processor 120. The page of the file mapped to the memory may be a page in which a page placed in a physical memory address is placed in a virtual address space.

In an embodiment, when executed by the processor 120, the instructions stored in the memory 130 may cause the electronic device 101 to determine whether the memory allocation request of the page is a request for a file having a mapped page.

In an embodiment, if the page mapped to the memory is in the file (operation 303-Yes), the electronic device 101 may branch from operation 303 to operation 311.

In an embodiment, if the page mapped to the memory is not in the file (operation 303-No), the electronic device 101 may branch from operation 303 to operation 305.

In an embodiment, if the file does not have any pages mapped to the memory (operation 303-No), the electronic device 101 may branch from operation 303 to operation 305.

In an embodiment, in operation 305, the electronic device 101 may identify whether there is a file policy in which the page requesting memory allocation selects the first node 201 under the control of the processor 120.

In an embodiment, when executed by the processor 120, the instructions stored in the memory 130 may cause the electronic device 101 to identify whether there is a file policy in which the page requesting memory allocation selects the first node 201.

In an embodiment, a file page of a specific application workload may require memory allocation to a node having an access speed faster than a specified access speed. The electronic device 101 may select a node to allocate the page to the memory, based on an individual file policy that takes precedence over the basic policy. The basic policy may include, for example, a policy for selecting a node having a speed slower than a specified access speed. The individual file policy may include, for example, a policy for selecting a node having a speed faster than a specified access speed.

In an embodiment, the file policy may be based on extended file attributes specifying user-defined attributes.

**EP 4 617 883 A1**

In an embodiment, in operation 309, the electronic device 101 may select a node by identifying extended file attributes of the page requesting memory allocation under the control of the processor 120. Extended file attributes may be loaded into a mapping data structure of the page and used.

In an embodiment, when executed by the processor 120, the instructions stored in the memory 130 may cause the electronic device 101 to select a node by identifying extended file attributes of the page requesting memory allocation.

Table 1 shows page allocation and/or migration policies according to user-defined attributes.

[Table 1]

| Attributes | Description |
| --- | --- |
| user.pgctrl.system | Follow Linux default memory allocation policy |
| user.pgctrl.fast | Prefer fast node |
| user.pgctrl.slow | Prefer slow node |

In an embodiment, the first node 201 may be a node having a faster access speed than the second node 202. If there is a file policy in which the page requesting memory allocation selects the first node 201 (operation 305-Yes), the electronic device 101 may branch from operation 305 to operation 311. If there is no file policy in which the page requesting memory allocation selects the first node 201 (operation 305-No), the electronic device 101 may branch from operation 305 to operation 307.

In an embodiment, in operation 307, the electronic device 101 may identify whether the page cache hit ratio is greater than the moving average under the control of the processor 120.

In an embodiment, when executed by the processor 120, the instructions stored in the memory 130 may cause the electronic device 101 to identify whether the page cache hit ratio is greater than the moving average.

In an embodiment, the electronic device 101 may control memory allocation and/or migration of a page according to user-defined attributes. In addition, the electronic device 101 may control memory allocation and/or migration of a page according to a page cache hit ratio.

In an embodiment, the electronic device 101 may identify whether the page being searched for by using a memory address is in the page cache. The "hit" may mean that the page being searched for exists in the page cache, and "miss" may mean that the page being searched for does not exist in the page cache.

The electronic device 101 may identify the hit ratio of the instantaneous page cache based on the hit and miss of the page cache in an n-second cycle (e.g., n is a specified natural number). The electronic device 101 may identify the moving average of the previous m pieces of data. If the hit rate of the instantaneous page cache is greater than the moving average of data, the electronic device 101 may select a node having a high access speed in memory allocation of the page.

In an embodiment, the electronic device 101 may add weights to the hit rate of the instantaneous page cache and compare it with the moving average. If the hit rate of the instantaneous page cache with added weights is greater than the moving average of data, the electronic device 101 may select a node having a high access speed in memory allocation of the page. The electronic device 101 may identify the contribution of the hit rate of the instantaneous page cache based on the representative extension. The electronic device 101 may add weights to the hit rate of the instantaneous page cache and compare it with the moving average based on the identified contribution.

In an embodiment, in operation 307, the operation for the electronic device 101 to identify whether the page cache hit ratio is greater than the moving average under the control of the processor 120 may be identified by determining whether the hit rate of each page contributes to the hit rate of the global page cache.

In an embodiment, when executed by the processor 120, the operation in which the instructions stored in the memory 130 cause the electronic device 101 to identify whether the page cache hit ratio is greater than the moving average may be identified by determining whether the hit rate of each page contributes to the hit rate of the global page cache.

If the page cache hit ratio requesting memory allocation is greater than the moving average (operation 307-Yes), the electronic device 101 may branch from operation 307 to operation 311.

If the page cache hit ratio requesting memory allocation is less than or equal to the moving average (operation 307-No), the electronic device 101 may branch from operation 307 to operation 309.

In an embodiment, in operation 309, the electronic device 101 may select the second node 202 and allocate a page requesting memory allocation to the memory under the control of the processor 120.

In an embodiment, when executed by the processor 120, the instructions stored in the memory 130 may cause the electronic device 101 to select the second node 202 and allocate a page requesting memory allocation to the memory.

In an embodiment, in operation 309, when selecting the second node 202 and allocate a page requesting memory allocation to the memory under the control of the processor 120, the electronic device 101 may allocate the page to the zone of a slow node that encounters for the first time during the zonelist traversal.

In an embodiment, when the instructions in the memory 130 are executed by the processor 120 and cause the

8

electronic device 101 to select the second node 202 and allocate a page requesting memory allocation to the memory, the electronic device 101 may allocate the page to the zone of a slow node that encounters for the first time during the zonelist traversal.

In an embodiment, in operation 311, the electronic device 101 may select the first node 201 and allocate a page requesting memory allocation to the memory under the control of the processor 120.

In an embodiment, when executed by the processor 120, the instructions stored in the memory 130 may cause the electronic device 101 to select the first node 201 and allocate a page requesting memory allocation to the memory.

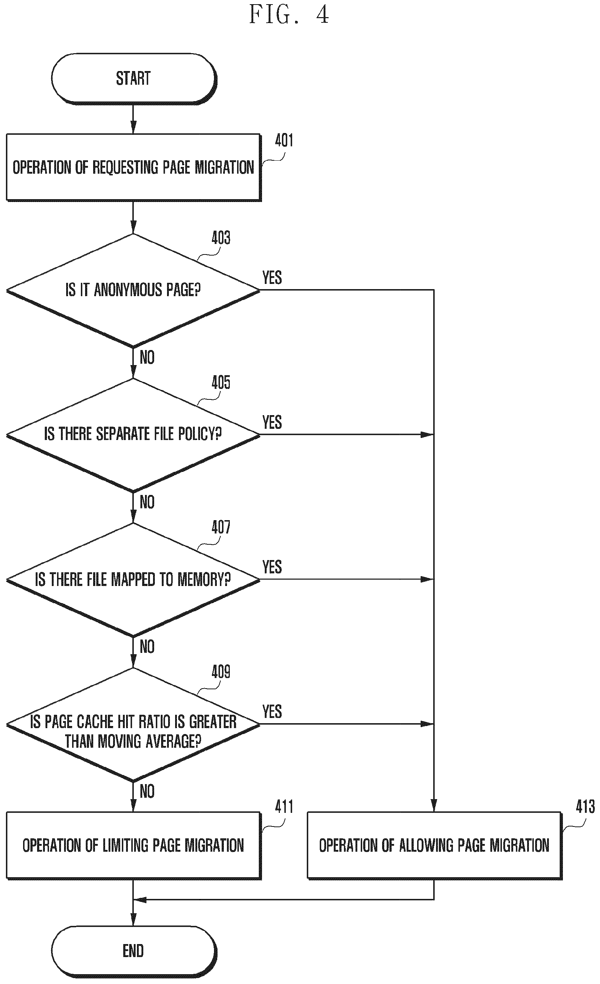

FIG. 4 is a flow chart illustrating a memory management method of an electronic device 101 according to an embodiment of the disclosure.

In an embodiment, the memory 130 may store instructions including a memory management method of the electronic device 101. When executed by the processor 120, the instructions stored in the memory 130 may cause the electronic device 101 to perform a memory management method of the electronic device 101.

In an embodiment, the computer-readable recording medium may record software for executing instructions for performing the memory management method of the electronic device 101 of FIG. 4.

In an embodiment, in operation 401, the electronic device 101 may receive a request for migration of a page under the control of the processor 120.

In an embodiment, when executed by the processor 120, the instructions stored in the memory 130 may cause the electronic device 101 to receive a request for migration of a page.

In an embodiment, in operation 403, the electronic device 101 may determine whether the page requesting migration is an anonymous page under the control of the processor 120. The page migration may be an operation of moving an address on a memory.

In an embodiment, when executed by the processor 120, the instructions stored in the memory 130 may cause the electronic device 101 to determine whether the page requesting migration is an anonymous page.

If the page requesting migration is an anonymous page (operation 403-Yes), the electronic device 101 may branch from operation 403 to operation 413.

If the page requesting migration is not an anonymous page (operation 403-No), the electronic device 101 may branch from operation 403 to operation 405.

In an embodiment, an anonymous page 210 represents a memory that has not been read from a file, and may be a page allocated for a general purpose necessary for the execution of a program, such as the heap and/or stack of the process.

In an embodiment, the anonymous page 210 may be directly mapped to the virtual address space 21 and accessed according to a load and/or store processor instruction. Accordingly, the anonymous page 210 may request an access latency faster than the specified access latency. The anonymous page 210 may be a migratable page.

In an embodiment, in operation 405, the electronic device 101 may identify whether the page requesting migration has a separate file policy under the control of the processor 120.

In an embodiment, when executed by the processor 120, the instructions stored in the memory 130 may cause the electronic device 101 to identify whether the page requesting migration has a separate file policy.

In an embodiment, a file page of a specific application workload may require migration of the file page.

The electronic device 101 may migrate the page based on an individual file policy that takes precedence over the basic policy. The basic policy may, for example, not allow the migration of the file page.

In an embodiment, the file policy may be based on extended file attributes specifying user-defined attributes.

In an embodiment, in operation 405, the electronic device 101 may determine whether the page is migrated by identifying the extended file attributes of the page that has requested migration under the control of the processor 120.

In an embodiment, when executed by the processor 120, the instructions stored in the memory 130 may cause the electronic device 101 to determine whether the page is migrated by identifying the extended file attributes of the page that has requested migration.

If the page that has requested migration has a file policy that allows the file migration (operation 405-Yes), the electronic device 101 may branch from operation 405 to operation 413.

If the page that has requested migration has no file policy that allows the file migration (operation 405-No), the electronic device 101 may branch from operation 405 to operation 407.

In an embodiment, in operation 407, the first electronic device 101 may determine whether there is a page mapped to the memory in the file under the control of the processor 120. When receiving the request for migration of a page, the electronic device 101 may determine whether there is a page mapped to the memory in the file under the control of the processor 120. The page mapped to the memory may be a page in which a page existing in the physical memory is mapped to a virtual address space of an application.

In an embodiment, when executed by the processor 120, the instructions stored in the memory 130 may cause the electronic device 101 to determine whether there is a page mapped to the memory in the file.

In an embodiment, if there is a page mapped to the memory in the file (operation 407-Yes), the electronic device 101 may branch from operation 407 to operation 413.

In an embodiment, if there is no page mapped to the memory in the file (operation 407-No), the electronic device 101 may branch from operation 407 to operation 409.

In an embodiment, in operation 409, the electronic device 101 may identify whether the page cache hit ratio is greater than the moving average under the control of the processor 120.

In an embodiment, when executed by the processor 120, the instructions stored in the memory 130 may cause the electronic device 101 to identify whether the page cache hit ratio is greater than the moving average.

In an embodiment, the electronic device 101 may control memory allocation and/or migration of a page according to user-defined attributes. In addition, the electronic device 101 may control memory allocation and/or migration of a page according to a page cache hit ratio.

In an embodiment, the electronic device 101 may identify whether the page being searched for by using a memory address is in the page cache. The "hit" may mean that the page being searched for exists in the page cache, and "miss" may mean that the page being searched for does not exist in the page cache.

The electronic device 101 may identify the hit ratio of the instantaneous page cache based on the hit and miss of the page cache in an n-second cycle (e.g., n is a specified natural number). The electronic device 101 may identify the moving average of the previous m pieces of data. If the hit rate of the instantaneous page cache is greater than the moving average of data, the electronic device 101 may select a node having a high access speed in memory allocation of the page.

In an embodiment, the electronic device 101 may add weights to the hit rate of the instantaneous page cache and compare it with the moving average. If the hit rate of the instantaneous page cache with added weights is greater than the moving average of data, the electronic device 101 may select a node having a high access speed in memory allocation of the page. The electronic device 101 may identify the contribution of the hit rate of the instantaneous page cache based on the representative extension. The electronic device 101 may add weights to the hit rate of the instantaneous page cache and compare it with the moving average based on the identified contribution.

If the page cache hit ratio requesting migration is greater than the moving average (operation 409-Yes), the electronic device 101 may branch from operation 409 to operation 413.

If the page cache hit ratio requesting migration is less than or equal to the moving average (operation 409-No), the electronic device 101 may branch from operation 409 to operation 411.

In an embodiment, in operation 411, the electronic device 101 may limit migration of a page requesting migration under the control of the processor 120.

In an embodiment, when executed by the processor 120, the instructions stored in the memory 130 may cause the electronic device 101 to limit migration of a page requesting migration.

In an embodiment, in operation 413, the electronic device 101 may allow migration of a page requesting migration under the control of the processor 120.

In an embodiment, when executed by the processor 120, the instructions stored in the memory 130 may cause the electronic device 101 to allow migration of a page requesting migration.

In an embodiment, in operation 413, the electronic device 101 may allow migration of a page requesting migration from the second node 202 to the first node 201 under the control of the processor 120.

In an embodiment, when executed by the processor 120, the instructions stored in the memory 130 may cause the electronic device 101 to allow migration of a page requesting migration from the second node 202 to the first node 201.

In an embodiment, in operation 413, the electronic device 101 may allow migration of a page requesting migration from a node slower than a specified access speed to a faster node under the control of the processor 120.

In an embodiment, when executed by the processor 120, the instructions stored in the memory 130 may cause the electronic device 101 to allow migration of a page requesting migration from a node slower than a specified access speed to a faster node.

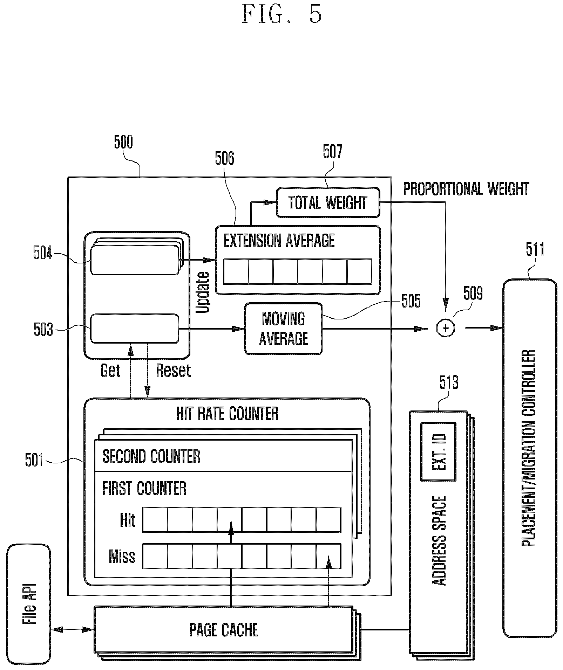

FIG. 5 is a block diagram illustrating a page cache hit ratio manager 500 according to an embodiment of the disclosure.

In an embodiment, the electronic device 101 may control the page cache hit ratio manager 500 based on the processor 120. The page cache hit ratio manager 500 is stored in the memory 130 and may be implemented as software executed under the control of the processor 120. For example, the operation of the page cache hit ratio manager 500 may be understood as the operation of the processor 120.

In an embodiment, the page cache hit ratio manager 500 may include a hit rate counter 501, a first hit rate calculator 503, and a second hit rate calculator 504.

In an embodiment, the hit rate counter 501 includes a plurality of counters, and at least one of the plurality of counters may count hits and misses of the global page cache. At least one of the plurality of counters may count hits and misses of the instantaneous page cache. At least one of the plurality of counters may count hits and misses for each file representative extension.

In an embodiment, if hits and misses of the instantaneous page cache are counted and the hits and misses of the global page cache are counted in the hit rate counter 501, based on this, the first hit rate calculator 503 may calculate or identify the hit rate of the instantaneous page cache. A moving average calculator 505 may calculate a moving average of m pieces of data.

In an embodiment, if the instantaneous page cache hit ratio exceeds the moving average, the electronic device 101 may allow the use of a fast node. For example, the use of the fast node with probability according to Equation 1 may be allowed.

[Equation 1]

Acceptable probability = (Instantaneous page cache hit ratio / Moving average -1) x 100

If the instantaneous page cache hit ratio is 90% and the moving average is 80%, the acceptable probability of using a fast node according to Equation 1 may be 12.5%.

The page migration according to Equation 1 may be based on a global probability.

In an embodiment, the electronic device 101 may calculate, identify, and manage the cumulative average of the page cache hit ratio for each representative file extension based on the page cache hit ratio manager 500. The electronic device 101 may add a weight 506 corresponding to the cumulative average of the page cache hit ratio for each extension from the total weight 507 to the moving average, based on the page cache hit ratio manager 500.

In an embodiment, in order to provide extension information to the page cache hit ratio manager 500, the electronic device 101 may recognize the extension when the file extension ID (identification) file is first accessed in the file page allocation logic to configure or store the extension in an extension ID 513 of the file address space. The extension ID 513 may be transferred to the core memory allocation logic.

In an embodiment, a placement/migration controller 511 that is part of the core memory allocation logic may transmit the extension ID 513 as a factor to the page cache hit ratio manager 500 so that the page cache hit ratio manager 500 may additionally calculate the weight for each extension.

In an embodiment, each cell of the extension average 506 may be a cumulative average of the page cache hit ratio for each extension.

In an embodiment, the page cache hit ratio manager 500 may normalize the page cache hit ratio for each extension to a maximum value. The page cache hit ratio manager 500 may calculate the weight of each extension by a normalized ratio from the total weight 507.

For example, it may be assumed that the total weight is 60, there are 5 representative extensions, and the cumulative average of each representative extension page cache hit ratio (each column of 506) is 10%, 20%, 30%, 40%, and 50%, respectively. The normalized weight ratio is 1, 2, 3, 4, and 5, and an extension (or file) with a cumulative average page cache hit ratio of 10% may have a weight of $60 \times 1/15 = 4\%$ added to the global probability. The file with a cumulative average page cache hit ratio of 10% may be allowed to use a fast node with a probability of 16.4% by adding a weight of 4% to the 12.4% calculated in Equation 1. The total weight 507 of all file extensions and the number/type of representative file extensions may be configured by the system administrator through the system node. As the total weight 507 value increases, the effect of the weight addition due to the file extension increases.

In an embodiment, if hits and misses of the instantaneous page cache are counted in the hit rate counter 501, based on this, the second hit rate calculator 504 may calculate the extension average 506 that is the hit ratio of the instantaneous page cache.

In an embodiment, the page cache hit ratio manager 500 may transmit the result of comparing the extension average 506 and the moving average 506 to the placement/migration controller 511. The placement/migration controller 511 may control page allocation and/or migration based on the result of comparing the extension average 506 and the moving average 506.

In an embodiment, the page cache hit ratio manager 500 may transmit the result of adding a proportional weight according to the total weight 507 to the extension average 506 and the result calculated by the instantaneous average and the moving average 506 to the placement/migration controller 511. The placement/migration controller 511 may control page allocation and/or migration based on the transmitted value.

In an embodiment, the electronic device 101 may include a first memory 1311 included in a first node; a second memory 1312 included in a second node having a slower access speed than the first node; and a memory 130 storing instructions, and the instructions, when executed by a processor 120, cause the electronic device 101 to receive a request for memory allocation of a page, determine whether the request is for a file that has a page mapped to a memory, and allocate the page to the first memory 1311 included in the first node when the request is for a file that has a page mapped to the memory.

In an embodiment, the file that has a page mapped to the memory may include a file in which a file page placed in physical memory is mapped to an application's virtual address space.

In an embodiment, the instructions, when executed by the processor 120, may cause the electronic device 101 to: identify whether there is a file policy in which the page selects the first node when the request is for a file that does not have a page mapped to the memory, and allocate the page to the first memory 1311 included in the first node when there is the file policy that selects the first node.

In an embodiment, the instructions, when executed by the processor 120, may cause the electronic device 101 to: allocate the page to the second memory 1312 included in the second node when the page cache hit ratio is less than or equal to the moving average, and allocate a page to the zone of a slow node encounters for the first time during a zonelist traversal when allocating the page to the second memory 1312.

In an embodiment, the file policy may be based on extended file attributes that specify user-defined attributes, and the extended file attributes may be loaded into the mapping data structure of the page.

In an embodiment, the electronic device 101 may include a basic policy and an individual file policy, and the basic file policy may include a policy for selecting a node having a slower speed than a specified access speed.

In an embodiment, the individual file policy may include a policy for selecting a node having a faster speed than a specified access speed.

In an embodiment, the instructions, when executed by the processor 120, may cause the electronic device 101 to: identify whether a page cache hit ratio is greater than a moving average when there is no file policy for selecting the first node, and allocate the page to the first memory 1311 included in the first node when the page cache hit ratio is greater than the moving average.

In an embodiment, the instructions, when executed by the processor 120, may cause the electronic device 101 to: identify whether a page cache hit ratio to which a weight is added is greater than a moving average when there is no file policy for selecting the first node, and allocate the page to the first memory 1311 included in the first node when the page cache hit ratio to which the weight is added is greater than the moving average.

In an embodiment, the instructions, when executed by the processor 120, may cause the electronic device 101 to: determine whether a page requesting migration is an anonymous page when migration of the page is requested, allow page migration when the page requesting migration is the anonymous page, identify whether there is a separate file policy when the page requesting migration is not the anonymous page, allow the page migration when there is a file policy that allows file migration, determine whether there is a file that has a page mapped to the memory when there is no file policy that allows the file migration, allow the page migration when there is a file that has a page mapped to the memory, identify whether a page cache hit ratio is greater than a moving average when there is no file that has a page mapped to the memory, allow migration when the page cache hit ratio requesting migration is greater than the moving average, identify whether the cache hit rate is greater than the weighted moving average to which a weight corresponding to the cumulative average of the page cache hit ratio by extension from the total weight is added when there is no file that has a page mapped to the memory, and allow migration when the page cache hit ratio requesting migration is greater than the moving average.

In an embodiment, a method of memory management performed by the electronic device 101 comprising a first memory 1311 included in a first node and a second memory 1312 included in a second node with a slower access speed than the first node nay include receiving a request for memory allocation of a page; determining whether the request is for a file that has a page mapped to a memory; and allocating the page to the first memory 1311 included in the first node when the request is for a file that has a page mapped to the memory.

In an embodiment, the file that has a page mapped to the memory may include a file in which a file page placed in physical memory is mapped to an application's virtual address space.

In an embodiment, the method of memory management performed by the electronic device 101 may include identifying whether there is a file policy in which the page selects the first node when the request is for a file that does not have a page mapped to the memory; and allocating the page to the first memory included in the first node when there is the file policy that selects the first node.

In an embodiment, the method of memory management performed by the electronic device 101 may include allocating the page to the second memory 1312 included in the second node when the page cache hit ratio is less than or equal to the moving average; and allocating a page to the zone of a slow node encounters for the first time during a zonelist traversal when allocating the page to the second memory 1312.

In an embodiment, the method of memory management performed by the electronic device 101 may include identifying whether a page cache hit ratio is greater than a moving average when there is no file policy for selecting the first node; and allocating the page to the first memory 1311 included in the first node when the page cache hit ratio is greater than the moving average.

In an embodiment, the method of memory management performed by the electronic device 101 may include identifying whether a page cache hit ratio to which a weight is added is greater than a moving average when there is no file policy for selecting the first node; and allocating the page to the first memory 1311 included in the first node when the page cache hit ratio to which the weight is added is greater than the moving average.

In an embodiment, the method of memory management performed by the electronic device 101 may include determining whether a page requesting migration is an anonymous page when migration of the page is requested; allowing page migration when the page requesting migration is the anonymous page; identifying whether there is a separate file policy when the page requesting migration is not the anonymous page, and allow the page migration when there is a file policy that allows file migration; determining whether there is a file that has a page mapped to the memory when there is no file policy that allows the file migration, and allow the page migration when there is a file that has a page mapped to the memory; identifying whether a page cache hit ratio is greater than a moving average when there is no file that has a page mapped to the memory, and allow migration when the page cache hit rate requesting migration is greater than the moving average; and identifying whether the cache hit rate is greater than the weighted moving average to which a weight corresponding to the cumulative average of the page cache hit ratio by extension from the total weight is added when there is no file that has a page mapped to the memory, and allow migration when the page cache hit ratio requesting migration is greater than the moving average.

In an embodiment, a computer-readable recording medium in which software is recorded for executing instructions that enable at least one processor 120 to perform a memory management method of an electronic device 101 including a first memory 1311 included in a first node and a second memory 1312 included in a second node which has a slower access speed than the first node may include instructions or receiving a request for memory allocation of a page; determining whether the request is for a file that has a page mapped to a memory; and allocating the page to the first memory 1311 included in the first node when the request is for a file that has a page mapped to the memory.

An electronic device according to various embodiments of the disclosure may be various types of devices. The electronic device may include, for example, a portable communication device (e.g., smartphone), computer device, portable multimedia device, portable medical device, camera, wearable device, or home appliance. The electronic device according to embodiments of the disclosure is not limited to the above-described devices.

Various embodiments of the disclosure and terms used herein are not intended to limit the technical features described in the disclosure to specific embodiments, but should be understood to encompass various modifications, equivalents, or alternatives of the embodiments. With respect to the description of the drawing, similar reference numerals may be used for similar or related components. The singular form of a noun corresponding to an item may include one or more items unless the relevant context clearly indicates otherwise. In the disclosure, each of the phrases such as "A or B", "at least one of A and B", "at least one of A or B", "A, B, or C", "at least one of A, B, and C", and "at least one of A, B, or C" may include one of the items listed together in the corresponding phrase, or all possible combinations thereof. Terms such as "first," "second," or "first" or "second" may be used merely to distinguish the component from other corresponding components, and do not limit the components in any other respect (e.g., importance or order). When a (e.g., first) component is referred to as "coupled" or "connected" to another (e.g., second) component, with or without the terms "functionally" or "communicatively," it means that the component may be connected to the other component directly (e.g., wired), wirelessly, or through a third component.

The term "module" as used in the disclosure may include a unit implemented in hardware, software, or firmware, and may be used interchangeably with terms such as logic, logic block, component, or circuit. A module may be a component that is configured integrally, or a minimum unit of the component that performs one or more functions, or a part thereof. For example, according to one embodiment, a module may be implemented in the form of an application-specific integrated circuit (ASIC).

Various embodiments of the disclosure may be implemented as software (e.g., the program 140) including one or more instructions stored in a storage medium (e.g., the internal memory 136 or the external memory 138) readable by a machine (e.g., the electronic device 101). For example, the processor (e.g., the processor 120) of the device (e.g., the electronic device 101) may call and execute at least one of one or more stored instructions from a storage medium. This makes it possible for the device to be operated to perform at least one function according to the at least one instruction called. The instructions may include codes generated by a compiler or codes executable by an interpreter. The storage medium readable by the device may be provided in the form of a non-transitory storage medium. Here, "non-transitory" means only that the storage medium is a tangible device and does not include a signal (e.g., electromagnetic wave), and this term does not distinguish between a case where data is stored semi-permanently on a storage medium and a case where data is stored temporarily.

According to an embodiment, the methods according to various embodiments disclosed in the disclosure may be provided as included in a computer program product. The computer program product may be traded between a seller and a buyer as a commodity. The computer program product may be distributed in the form of a machine-readable storage medium (e.g., compact disc read only memory (CD-ROM)), or may be distributed online (e.g., downloaded or uploaded) through an application store (e.g., PlayStore™) or directly between two user devices (e.g., smartphones). In the case of online distribution, at least a portion of the computer program product may be temporarily stored or temporarily generated in a machine-readable storage medium, such as a memory of a manufacturer's server, an application store's server, or an intermediary server.

According to various embodiments, each component (e.g., module or program) of the above-described components may include a single or multiple entities. According to various embodiments, one or more of the above-described corresponding components or operations may be omitted, or one or more other components or operations may be added. Alternatively or additionally, multiple components (e.g., modules or programs) may be integrated into one component. In such a case, the integrated component may perform one or more functions of each of the multiple components identically or similarly to those performed by the corresponding component of the multiple components prior to the integration. According to various embodiments, the operations performed by the module, program, or other component may be executed sequentially, in parallel, repeatedly, or heuristically, or one or more of the operations may be executed in a different order, omitted, or one or more other operations may be added.

**Claims**

1. An electronic device comprising:

   a first memory included in a first node;
   a second memory included in a second node having a slower access speed than the first node; and
   a memory storing instructions,
   wherein the instructions, when executed by a processor, cause an electronic device to:

   receive a request for memory allocation of a page;
   determine whether the request is for a file that has a page mapped to a memory; and
   allocate the page to the first memory included in the first node when the request is for a file that has a page mapped to the memory.

2. The electronic device of claim 1,
   wherein the file that has a page mapped to the memory comprises a file in which a file page placed in physical memory is mapped to an application's virtual address space.

3. The electronic device of claim 1,
   wherein the instructions, when executed by the processor, cause the electronic device to:

   identify whether there is a file policy in which the page selects the first node when the request is for a file that does not have a page mapped to the memory; and
   allocate the page to the first memory included in the first node when there is the file policy that selects the first node.

4. The electronic device of claim 3,
   wherein the instructions, when executed by the processor, cause the electronic device to:

   allocate the page to the second memory included in the second node when the page cache hit ratio is less than or equal to the moving average; and
   allocate a page to the zone of a slow node encounters for the first time during a zonelist traversal when allocating the page to the second memory,
   wherein the file policy is based on extended file attributes that specify user-defined attributes,
   wherein the extended file attributes are loaded into the mapping data structure of the page, and comprise a basic policy and an individual file policy,
   wherein the basic file policy comprises a policy for selecting a node having a slower speed than a specified access speed, and
   wherein the individual file policy comprises a policy for selecting a node having a faster speed than a specified access speed.

5. The electronic device of claim 2,
   wherein the instructions, when executed by the processor, cause the electronic device to:

   identify whether a page cache hit ratio is greater than a moving average when there is no file policy for selecting the first node; and
   allocate the page to the first memory included in the first node when the page cache hit ratio is greater than the moving average.

6. The electronic device of claim 2,
   wherein the instructions, when executed by the processor, cause the electronic device to:

identify whether a page cache hit ratio to which a weight is added is greater than a moving average when there is no file policy for selecting the first node; and

allocate the page to the first memory included in the first node when the page cache hit ratio to which the weight is added is greater than the moving average.

7. The electronic device of claim 1,
   wherein the instructions, when executed by the processor, cause the electronic device to:

   determine whether a page requesting migration is an anonymous page when migration of the page is requested;
   allow page migration when the page requesting migration is the anonymous page;
   identify whether there is a separate file policy when the page requesting migration is not the anonymous page, and allow the page migration when there is a file policy that allows file migration;
   determine whether there is a file that has a page mapped to the memory when there is no file policy that allows the file migration, and allow the page migration when there is a file that has a page mapped to the memory;
   identify whether a page cache hit ratio is greater than a moving average when there is no file that has a page mapped to the memory, and allow migration when the page cache hit ratio requesting migration is greater than the moving average; and
   identify whether the cache hit rate is greater than the weighted moving average to which a weight corresponding to the cumulative average of the page cache hit ratio by extension from the total weight is added when there is no file that has a page mapped to the memory, and allow migration when the page cache hit ratio requesting migration is greater than the moving average.

8. A method of memory management performed by an electronic device comprising a first memory included in a first node and a second memory included in a second node with a slower access speed than the first node, the method comprising:

   receiving a request for memory allocation of a page;
   determining whether the request is for a file that has a page mapped to a memory; and
   allocating the page to the first memory included in the first node when the request is for a file that has a page mapped to the memory.

9. The method of claim 8,
   wherein the file that has a page mapped to the memory comprises a file in which a file page placed in physical memory is mapped to an application's virtual address space.

10. The method of claim 8, further comprising:

    identifying whether there is a file policy in which the page selects the first node when the request is for a file that does not have a page mapped to the memory; and
    allocating the page to the first memory included in the first node when there is the file policy that selects the first node.

11. The method of claim 10, further comprising:

    allocating the page to the second memory included in the second node when the page cache hit ratio is less than or equal to the moving average; and
    allocating a page to the zone of a slow node encounters for the first time during a zonelist traversal when allocating the page to the second memory,
    wherein the file policy is based on extended file attributes that specify user-defined attributes,
    wherein the extended file attributes are loaded into the mapping data structure of the page, and
    wherein the individual file policy comprises a policy for selecting a node having a faster speed than a specified access speed.

12. The method of claim 9, further comprising:

    identifying whether a page cache hit ratio is greater than a moving average when there is no file policy for selecting the first node; and
    allocating the page to the first memory included in the first node when the page cache hit ratio is greater than the moving average.

13. The method of claim 9, further comprising:

identifying whether a page cache hit ratio to which a weight is added is greater than a moving average when there is no file policy for selecting the first node; and
allocating the page to the first memory included in the first node when the page cache hit ratio to which the weight is added is greater than the moving average.

14. The method of claim 8, further comprising:

determining whether a page requesting migration is an anonymous page when migration of the page is requested;
allowing page migration when the page requesting migration is the anonymous page;
identifying whether there is a separate file policy when the page requesting migration is not the anonymous page, and allow the page migration when there is a file policy that allows file migration;
determining whether there is a file that has a page mapped to the memory when there is no file policy that allows the file migration, and allow the page migration when there is a file that has a page mapped to the memory;
identifying whether a page cache hit ratio is greater than a moving average when there is no file that has a page mapped to the memory, and allow migration when the page cache hit ratio requesting migration is greater than the moving average; and
identifying whether the cache hit rate is greater than the weighted moving average to which a weight corresponding to the cumulative average of the page cache hit ratio by extension from the total weight is added when there is no file that has a page mapped to the memory, and allow migration when the page cache hit ratio requesting migration is greater than the moving average.

15. A computer-readable recording medium in which software is recorded for executing instructions that enable at least one processor to perform a memory management method of an electronic device comprising a first memory included in a first node and a second memory included in a second node which has a slower access speed than the first node, wherein the instructions comprises:

receiving a request for memory allocation of a page;
determining whether the request is for a file that has a page mapped to a memory; and
allocating the page to the first memory included in the first node when the request is for a file that has a page mapped to the memory.

FIG. 1

ELECTRONIC DEVICE 101

MEMORY 130
VOLATILE MEMORY 132
NONVOLATILE MEMORY 134
INTERNAL MEMORY 136
EXTERNAL MEMORY 138

PROGRAM 140
APPLICATION 146
MIDDLEWARE 144
OPERATING SYSTEM 142

INPUT MODULE 150
SOUND OUTPUT MODULE 155
BATTERY 189

DISPLAY MODULE 160

PROCESSOR 120
MAIN PROCESSOR 121
AUXILIARY PROCESSOR 123

POWER MANAGEMENT MODULE 188
AUDIO MODULE 170
HAPTIC MODULE 179

COMMUNICATION MODULE 190
WIRELESS COMMUNICATION MODULE 192
WIRED COMMUNICATION MODULE 194

ANTENNA MODULE 197

SUBSCRIBER IDENTITY MODULE 196
INTERFACE 177

CONNECTION TERMINAL 178

SENSOR MODULE 176
CAMERA MODULE 180

ELECTRONIC DEVICE 102

FIRST NETWORK 198
SECOND NETWORK 199

ELECTRONIC DEVICE 104
SERVER 108

100

# FIG. 2

FIG. 3

```
                    ┌─────────────┐
                    │    START    │
                    └──────┬──────┘
                           │
                           ▼
              ┌────────────────────────┐  301
              │ OPERATION OF REQUESTING│
              │    MEMORY ALLOCATION   │
              └───────────┬────────────┘
                          │
                          ▼
                    ◇ 303
          IS REQUEST FOR
       MEMORY ALLOCATION OF PAGE      YES
      REQUEST FOR FILE HAVING PAGE ──────────┐
         MAPPED TO MEMORY?                    │
                   │ NO                        │
                   ▼                           │
                 ◇ 305                         │
        IS THERE FILE POLICY TO     YES        │
          SELECT FIRST NODE?    ──────────────▶│
                   │ NO                         │
                   ▼                            │
                 ◇ 307                          │
       IS PAGE CACHE HIT RATIO GREATER  YES     │
          THAN MOVING AVERAGE?      ──────────▶│
                   │ NO                         │
                   ▼                            ▼
      ┌────────────────────────┐  309  ┌──────────────────────────┐ 311
      │ OPERATION OF SELECTING │       │  OPERATION OF SELECTING  │
      │      SECOND NODE       │       │       FIRST NODE         │
      └───────────┬────────────┘       └────────────┬─────────────┘
                  │                                  │
                  │◀─────────────────────────────────┘
                  ▼
            ┌─────────────┐
            │     END     │
            └─────────────┘
```

FIG. 4

```
                    ┌─────────────┐
                    │    START    │
                    └──────┬──────┘
                           │
              ┌────────────▼─────────────────┐  401
              │ OPERATION OF REQUESTING PAGE │
              │          MIGRATION           │
              └────────────┬─────────────────┘
                           │
                        ╱──▼──╲  403
                      ╱         ╲        YES
                    ╱ IS IT ANONY- ╲──────────────────────────┐
                    ╲ MOUS PAGE?   ╱                           │
                      ╲         ╱                              │
                        ╲──┬──╱                                │
                           │ NO                                │
                        ╱──▼──╲  405                           │
                      ╱         ╲        YES                   │
                    ╱ IS THERE    ╲──────────────────────┐     │
                    ╲ SEPARATE     ╱                      │     │
                    ╲ FILE POLICY?╱                       │     │
                        ╲──┬──╱                           │     │
                           │ NO                           │     │
                        ╱──▼──╲  407                       │     │
                      ╱         ╲        YES              │     │
                    ╱ IS THERE    ╲──────────────────┐    │     │
                    ╲ FILE MAPPED ╱                  │    │     │
                    ╲ TO MEMORY? ╱                   │    │     │
                        ╲──┬──╱                       │    │     │
                           │ NO                       │    │     │
                        ╱──▼──╲  409                   │    │     │
                      ╱         ╲        YES          │    │     │
                    ╱ IS PAGE CACHE╲─────────────┐    │    │     │
                    ╲ HIT RATIO IS ╱             │    │    │     │
                    ╲ GREATER THAN ╱             │    │    │     │
                    ╲ MOVING AVG? ╱              │    │    │     │
                        ╲──┬──╱                   │    │    │     │
                           │ NO                   └────┴────┴─────┤
              ┌────────────▼─────────────┐  411                   │
              │ OPERATION OF LIMITING    │      ┌─────────────────▼──────────────┐  413
              │    PAGE MIGRATION        │      │ OPERATION OF ALLOWING PAGE     │
              └────────────┬─────────────┘      │          MIGRATION             │
                           │                    └────────────┬───────────────────┘
                           │◄────────────────────────────────┘
                    ┌──────▼──────┐
                    │     END     │
                    └─────────────┘
```

# FIG. 5

## INTERNATIONAL SEARCH REPORT

| | International application No. |
|---|---|
| | **PCT/KR2023/020626** |

| | A. | CLASSIFICATION OF SUBJECT MATTER |
|---|---|---|

**G06F 12/1009**(2016.01)i

According to International Patent Classification (IPC) or to both national classification and IPC

| B. | FIELDS SEARCHED |
|---|---|

Minimum documentation searched (classification system followed by classification symbols)

G06F 12/1009(2016.01); G06F 12/00(2006.01); G06F 12/02(2006.01); G06F 13/16(2006.01); G06F 3/06(2006.01); G06F 9/30(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 메모리(memory), 노드(node), 접근(access), 속도(speed), 페이지(page), 매핑(mapping), 할당(allocate), 요청(request), 가상(virtual), 캐시 적중률(cache hit rate), 파일(file), 정책(policy)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 10691365 B1 (RED HAT, INC.) 23 June 2020 (2020-06-23)<br>See column 6, lines 11-13; column 7, lines 12-22; column 11, lines 5-61 and column 12, lines 3-12; and figures 1 and 3A-4. | 1-3,8-10,15 |
| A | | 4-7,11-14 |
| A | KR 10-2017-0127666 A (ELECTRONICS AND TELECOMMUNICATIONS RESEARCH INSTITUTE) 22 November 2017 (2017-11-22)<br>See paragraphs [0058]-[0069]; and figure 4. | 1-15 |
| A | KR 10-2016-0033505 A (ELECTRONICS AND TELECOMMUNICATIONS RESEARCH INSTITUTE) 28 March 2016 (2016-03-28)<br>See paragraphs [0045]-[0054]; and figure 3. | 1-15 |
| A | KR 10-2016-0123370 A (HUAWEI TECHNOLOGIES CO., LTD.) 25 October 2016 (2016-10-25)<br>See paragraphs [0209]-[0244]; and figures 2a-2e. | 1-15 |

✓ Further documents are listed in the continuation of Box C.     ✓ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 March 2024** | **14 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/020626** |

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2017-0121045 A (SAMSUNG ELECTRONICS CO., LTD.) 01 November 2017 (2017-11-01) See paragraphs [0018]-[0023]; and figures 2a-2b. | 1-15 |

Form PCT/ISA/210 (second sheet) (July 2022)

**INTERNATIONAL SEARCH REPORT**
Information on patent family members

International application No.

**PCT/KR2023/020626**

| Patent document cited in search report | | | Publication date (day/month/year) | Patent family member(s) | | | Publication date (day/month/year) |
|---|---|---|---|---|---|---|---|
| US | 10691365 | B1 | 23 June 2020 | None | | | |
| KR | 10-2017-0127666 | A | 22 November 2017 | None | | | |
| KR | 10-2016-0033505 | A | 28 March 2016 | US | 2016-0085450 | A1 | 24 March 2016 |
| KR | 10-2016-0123370 | A | 25 October 2016 | CN | 105378687 | A | 02 March 2016 |
| | | | | CN | 105378687 | B | 25 December 2018 |
| | | | | EP | 3115903 | A1 | 11 January 2017 |
| | | | | EP | 3115903 | A4 | 08 March 2017 |
| | | | | EP | 3115903 | B1 | 15 April 2020 |
| | | | | JP | 2017-507448 | A | 16 March 2017 |
| | | | | JP | 6385468 | B2 | 05 September 2018 |
| | | | | KR | 10-2061079 | B1 | 31 December 2019 |
| | | | | US | 10452562 | B2 | 22 October 2019 |
| | | | | US | 2016-0378680 | A1 | 29 December 2016 |
| | | | | WO | 2015-131403 | A1 | 11 September 2015 |
| KR | 10-2017-0121045 | A | 01 November 2017 | CN | 107305509 | A | 31 October 2017 |
| | | | | CN | 107305509 | B | 04 July 2023 |
| | | | | DE | 102017104839 | A1 | 26 October 2017 |
| | | | | JP | 2017-194964 | A | 26 October 2017 |
| | | | | JP | 6757289 | B2 | 16 September 2020 |
| | | | | TW | 201738756 | A | 01 November 2017 |
| | | | | TW | I738737 | B | 11 September 2021 |
| | | | | US | 10380012 | B2 | 13 August 2019 |
| | | | | US | 2017-0308460 | A1 | 26 October 2017 |

Form PCT/ISA/210 (patent family annex) (July 2022)